# FASCICULE DE BREVET EUROPEEN

(11) **EP 4 222 052 B1**
(45) Date de publication et mention de la délivrance du brevet: **05.11.2025**
(21) Numéro de dépôt: 21798419.4
(22) Date de dépôt: 29.09.2021
(51) Int. Cl.: B64C 11/00, F01D 17/16

(54) **MODULE DE TURBOMACHINE EQUIPE D'UNE HELICE ET D'AUBES DE STATOR PORTEES PAR DEUX CARTERS ET TURBOMACHINE CORRESPONDANTE**
TURBINENMOTORMODUL MIT EINEM PROPELLER UND VON ZWEI GEHÄUSEN GETRAGENEN LEITSCHAUFELN UND ZUGEHÖRIGER TURBINENMOTOR
TURBINE ENGINE MODULE EQUIPPED WITH A PROPELLER AND STATOR VANES CARRIED BY TWO CASINGS AND CORRESPONDING TURBINE ENGINE

(30) Priorité: 29.09.2020 FR 2009934
(43) Date de publication de la demande: 09.08.2023
(73) Titulaire: SAFRAN AIRCRAFT ENGINES, 75015 Paris (FR)
(72) Inventeur: LEVISSE, Paul Ghislain Albert, 77550 MOISSY-CRAMAYEL (FR); BELMONTE, Olivier, 77550 MOISSY-CRAMAYEL (FR); GLEMAREC, Guillaume, 77550 MOISSY-CRAMAYEL (FR)
(74) Mandataire: Gevers & Orès
(86) Numéro de dépôt international: PCT/FR2021/051679
(87) Numéro de publication internationale: WO 2022/069834

(56) Documents cités:
- EP-A1- 3 093 437
- EP-A1- 3 093 443
- EP-A1- 3 225 813

## Description

### Domaine de l'invention

La présente invention concerne le domaine des turbomachines et en particulier un module de turbomachine comprenant une hélice non carénée et un redresseur avec des aubes de stator. Elle vise également la turbomachine correspondante.

### Arrière-plan technique

Des turbomachines comprenant au moins une hélice non carénée sont connues sous le terme anglais « open rotor » ou « unducted fan ». Dans cette catégorie de turbomachine, il existe celles qui ont deux hélices non carénées et contrarotatives (connues sous l'acronyme anglais UDF pour « Unducted Dual Fan ») ou celles ayant une seule hélice non carénée et un redresseur comprenant plusieurs aubes de stator (connues sous l'acronyme anglais USF pour « Unducted Single Fan »). L'hélice ou les hélices formant la partie propulsive peu(ven)t être placée(s) à l'arrière du générateur de gaz (ou moteur) de sorte à être du type pousseur ou à l'avant du générateur de gaz de sorte à être du type tracteur. Ces turbomachines sont des turbopropulseurs qui se distinguent des turboréacteurs par l'utilisation d'une hélice à l'extérieur de la nacelle (non carénée) au lieu d'une soufflante interne. Cela permet d'augmenter le taux de dilution de façon très importante sans être pénalisé par la masse des carters ou nacelles destiné(e)s à entourer les pales de l'hélice ou soufflante. Des exemples de ce genre de turbomachine sont décrits dans les documents EP-A1-3093437, EP-A1-3093443 et EP-A1-3225813.

Actuellement, ce genre de turbomachine, et notamment les turbomachines USF, présentent une longueur suivant leur axe longitudinal de rotation qui est assez importante de sorte que la masse est impactée et génèrent un bruit également important. Ce bruit provient du générateur de gaz mais surtout par l'interaction du sillage et du tourbillon générés par l'enroulement des lignes de courant au sommet des aubes de l'hélice et des aubes du redresseur. Ce bruit est d'autant plus fort que les aubes de stator sont proches des aubes des hélices. En effet, les aubes de stator des turbomachines sont installées généralement sur un carter d'entrée qui porte le bec de séparation des flux primaire et secondaire circulant respectivement dans une veine primaire et autour du carter d'entrée. Or, éloigner les aubes de stator du redresseur des aubes de l'hélice va à l'encontre de l'optimisation de la masse et de l'encombrement ; compacter la turbomachine au maximum étant aussi une problématique.

### Résumé de l'invention

L'objectif de la présente invention est de fournir un module de turbomachine avec des aubes de stator agencées de manière à réduire l'impact acoustique des turbomachines non carénées tout en évitant d'allonger la turbomachine.

Nous parvenons à cet objectif conformément à l'invention grâce à un module de turbomachine d'axe longitudinal X, comportant une hélice non carénée destinée à être entrainée en rotation autour de l'axe longitudinal X par un arbre de puissance qui est relié au moins à un organe rotorique, au moins un redresseur comprenant une pluralité d'aubes de stator réparties régulièrement autour de l'axe longitudinal X et s'étendant radialement dans un flux d'air secondaire, au moins un premier carter monté en amont, suivant l'axe longitudinal, de l'organe rotorique et un deuxième carter monté en aval, suivant l'axe longitudinal, de l'organe rotorique, le premier carter et le deuxième carter étant séparés par l'organe rotorique suivant l'axe longitudinal X et étant sont contigus, les aubes de stator comprenant chacun un pied logé dans un manchon qui est relié d'une part, au premier carter et d'autre part, au deuxième carter.

Ainsi, cette solution permet d'atteindre l'objectif susmentionné. En particulier, le fait de déporter les aubes du redresseur entre un premier carter et un deuxième carter au lieu qu'elles soient portées par le carter d'entrée, comme dans l'art antérieur, permet de réduire le bruit généré par ce type de turbomachine car la distance entre l'hélice et le redresseur a été augmentée. Avec un tel agencement où les aubes du redresseur sont portées par deux carters permet de faciliter l'intégration de servitudes dans le carter d'entrée (par exemple des servitudes de lubrifiant pour lubrifier et refroidir un réducteur ou un système de changement de pas des pales d'aubes, etc.). Les premier et deuxième carters étant déjà présents dans la turbomachine, l'agencement de moyen de support des aubes de stator entre ces deux carters évite d'allonger la turbomachine. Par ailleurs, le centre de gravité a été déplacé vers l'aval de la turbomachine ce qui implique moins de porte à faux pour la suspension de la turbomachine sur un aéronef. Enfin, la maintenance des aubes du redresseur et des éléments (tels qu'un compresseur, etc.) situés dans l'environnement des aubes est améliorée par démontage et pivotement d'une ou plusieurs aubes et/ou le soulèvement de bielles par exemple.

Le module comprend également l'une ou plusieurs des caractéristiques suivantes, prises seules ou en combinaison :
- le module comprend une pluralité de bielles s'étendant entre le premier carter et le deuxième carter, chaque bielle portant un manchon.
- chaque bielle comprend une première extrémité montée sur une première virole radialement externe du premier carter par une liaison de type rotule et une deuxième extrémité montée sur une deuxième virole radialement externe du deuxième carter par une liaison de type encastrement.
- chaque bielle est réalisée d'une seule pièce avec un manchon.
- les aubes de stator du redresseur sont à calage variable et en ce que le module comprend un système de changement de pas des pales des aubes de stator qui est agencé radialement à l'extérieur du deuxième carter.
- les aubes de stator du redresseur sont non carénées.
- un moins un palier de guidage en rotation d'un pied d'aube de stator est logé dans un logement interne d'un manchon.
- le premier carter est un carter d'entrée qui porte un bec de séparation destiné à diviser un flux d'air en un flux d'air primaire et en un flux d'air secondaire, le carter d'entrée comprenant une première virole radialement interne, la première virole radialement externe et entre lesquelles s'étendant au moins un premier bras radial structural.
- le deuxième carter est un carter inter-compresseur agencé en aval d'un compresseur basse pression, suivant l'axe longitudinal, le carter inter-compresseur comprenant une deuxième virole radialement interne, la deuxième virole radialement externe qui sont coaxiales avec l'axe longitudinal X et entre lesquelles s'étend au moins un deuxième bras radial structural.
- le rapport S /C correspondant à la distance S entre un bord de fuite des aubes de l'hélice et un bord d'attaque d'une aube de stator sur la corde C des aubes de l'hélice est de l'ordre de 3.
- l'organe rotorique est un compresseur basse pression.
- le redresseur est disposé en aval de l'hélice.
- les bielles sont en titane.
- le système de changement de pas des pales de l'hélice comprend au moins un moyen de commande comportant un corps fixe et un corps mobile axialement par rapport au corps fixe, et un mécanisme de liaison reliant chaque aube de stator au corps mobile du moyen de commande.

L'invention concerne en outre une turbomachine d'aéronef comprenant au moins un module présentant l'une quelconque des caractéristiques précédentes et un générateur de gaz en aval de l'hélice.

### Brève description des figures

L'invention sera mieux comprise, et d'autres buts, détails, caractéristiques et avantages de celle-ci apparaîtront plus clairement à la lecture de la description explicative détaillée qui va suivre, de modes de réalisation de l'invention donnés à titre d'exemples purement illustratifs et non limitatifs, en référence aux dessins schématiques annexés dans lesquels :
[Fig. 1] La figure 1 est une vue schématique, en coupe axiale et partielle d'un exemple de turbomachine avec une seule hélice non carénée à laquelle s'applique l'invention ;
[Fig. 2] La figure 2 représente en perspective un carter d'entrée relié à un carter inter-compresseur par un ensemble de bielles portant chacune un manchon destiné à recevoir le pied d'une aube de stator de redresseur selon l'invention ;
[Fig. 3] La figure 3 illustre en coupe axiale et partielle un mode de réalisation d'un pied d'aube de stator de turbomachine monté dans un manchon selon l'invention ; et
[Fig. 4] La figure 4 représente en perspective une vue arrière d'un mode de réalisation d'un carter inter compresseur selon l'invention.

### Description détaillée de l'invention

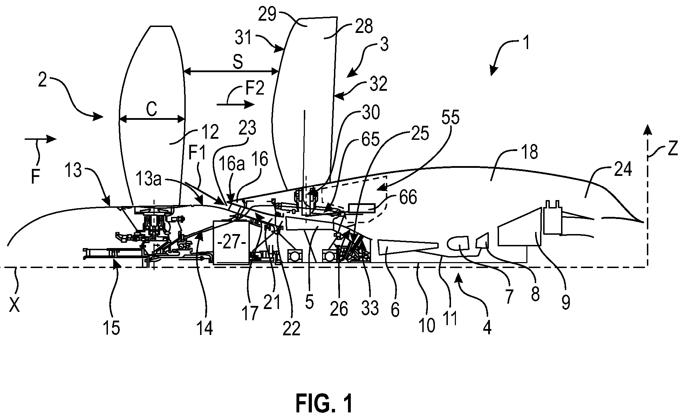

L'invention s'applique à une turbomachine 1 comprenant une seule hélice 2 non carénée et un redresseur 3 en aval de l'hélice 2. La turbomachine est destinée à être montée sur un aéronef. Une telle turbomachine est un turbopropulseur tel que représenté sur la figure 1. Cette turbomachine est connue sous l'expression anglaise «Unducted Single Fan » comme explicité précédemment. Bien entendu l'invention s'applique à d'autres types de turbomachine.

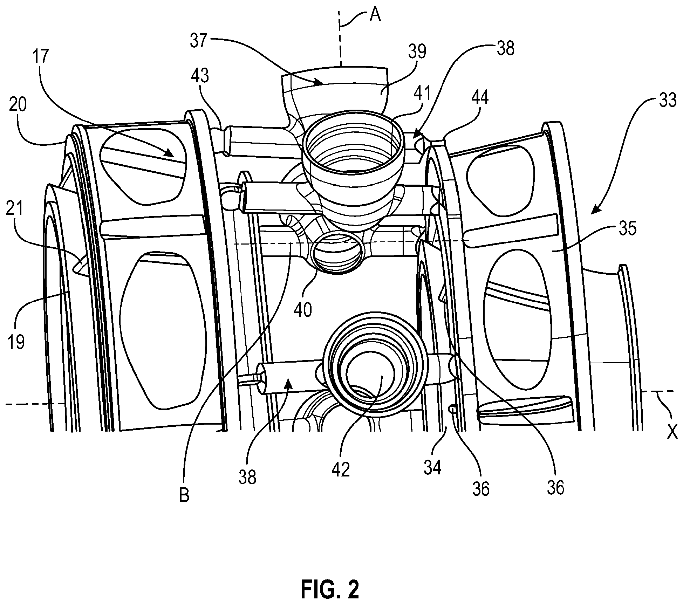

Dans la présente invention, et de manière générale, les termes « amont », « aval » « axial » et « axialement » sont définis par rapport à la circulation des gaz dans la turbomachine et ici suivant l'axe longitudinal X (et même de gauche à droite sur la figure 2). De même, les termes « radial », « interne » et « externe » sont définis par rapport à un axe radial Z perpendiculaire à l'axe longitudinal X et au regard de l'éloignement par rapport à l'axe longitudinal X.

Pour faciliter sa fabrication et son assemblage, une turbomachine est en général modulaire c'est-à-dire qu'elle comprend plusieurs modules qui sont fabriqués indépendamment les uns des autres et qui sont assemblés ensuite les uns aux autres. La modularité d'une turbomachine facilite en outre sa maintenance. Dans la présente demande, on entend par « module de turbomachine », un module qui comprend notamment une soufflante et son arbre de puissance pour entraîner l'hélice.

Sur la figure 1, la turbomachine 1 comprend un générateur de gaz 4 qui comporte typiquement d'amont en aval, un compresseur basse pression 5, un compresseur haute pression 6, une chambre de combustion 7, une turbine haute pression 8 et une turbine basse pression 9. Le compresseur basse pression 5 et la turbine basse pression 9 sont reliés mécaniquement par un arbre basse pression 10 de manière à former un corps basse pression. Le compresseur haute pression 6 et la turbine haute pression 8 sont reliés mécaniquement par un arbre haute pression 11 de manière à former un corps haute pression. L'arbre haute pression 11 s'étend radialement à l'extérieur de l'arbre basse pression 10 et sont coaxiaux.

Dans une autre configuration non représentée, le corps basse pression ou de faible pression comprend le compresseur basse pression qui est relié à une turbine de pression intermédiaire. Une turbine libre de puissance est montée en aval de la turbine de pression intermédiaire et est reliée à l'hélice décrite ci-après via un arbre de transmission de puissance pour l'entraîner en rotation.

L'hélice 2 non carénée est formée d'une couronne de pales 12 mobiles qui s'étendent depuis un carter rotatif 13 qui est centré et mobile en rotation autour de l'axe longitudinal X. Le carter rotatif 13 est monté mobile par rapport à un carter interne 14 qui s'étend en aval du carter rotatif 13. Dans l'exemple représenté de la figure 1, l'hélice 2 est montée en amont du générateur de gaz 4 (configuration de tracteur ou « puller » en anglais). De manière alternative, l'hélice est montée en aval du générateur de gaz (configuration de pousseur ou « pusher » en anglais). Les pales de l'hélice 2 peuvent être à calage variable au moyen d'un système de changement de pas 15.

Un flux d'air F qui entre dans la turbomachine se divise en un flux d'air primaire F1 et en un flux d'air secondaire F2 au niveau d'un bec de séparation 16. Ce dernier est porté par un carter d'entrée 17 centré sur l'axe longitudinal. Le carter d'entrée 17 est prolongé en aval par un carter externe ou carter inter-veine 18. Le carter d'entrée 17, illustré plus précisément sur la figure 2, comprend une virole radialement interne 19 et une virole radialement externe 20 qui sont centrées sur l'axe X. Une pluralité de bras structuraux 21 s'étendent radialement entre la virole radialement interne 19 et la virole radialement externe 20. Les bras 21 sont fixes et sont réalisés d'un seul tenant avec les viroles interne et externe 19, 20.

Le flux d'air primaire F1 circule dans une veine primaire 22 qui traverse le générateur de gaz 4. En particulier, le flux d'air primaire F1 entre dans le générateur de gaz 4 par une entrée d'air annulaire 23 et s'en échappe par une tuyère primaire 24 qui est disposée en aval du générateur de gaz 4. L'entrée d'air 23 est délimitée radialement au moins en partie par une paroi radialement interne 16a du bec de séparation 16 qui est annulaire et centrée sur l'axe X et par une paroi radialement externe 13a du carter rotatif 13.

La veine primaire 22 (dans laquelle débouche l'entrée d'air 23) est délimitée radialement par une paroi radialement interne 25 et une paroi radialement externe 26. La paroi radialement interne 25 est formée au moins en partie par la virole radialement interne 19 du carter d'entrée 17. La paroi radialement externe 26 est formée au moins en partie par la virole radialement externe 20 du carter d'entrée 17. Quant au flux secondaire F2, celui-ci circule autour du carter d'entrée 17.

L'arbre de puissance ou l'arbre basse pression 10 (respectivement de la turbine libre de puissance et de la turbine basse pression) entraîne l'hélice 2 qui comprime le flux d'air à l'extérieur du carter externe et fournit la majeure partie de la poussée. Eventuellement, un réducteur 27 est interposé entre l'hélice 2 et l'arbre de puissance comme cela est représenté sur la figure 1. Le réducteur 27 peut être de type à train planétaire ou à train épicycloïdal.

Le redresseur 3 comprend une pluralités d'aubes de stator 28 (ou aubes fixes) connues sous l'acronyme anglais « OGV » pour « Outlet Guide Vane ». Les aubes de stator 28 sont réparties régulièrement autour de l'axe longitudinal X et s'étendent radialement dans le flux d'air secondaire F2. Les aubes de stator 28 du redresseur 3 sont disposées en aval des pales 12 de l'hélice 2 de manière à redresseur le flux d'air généré par celles-ci. Chaque aube de stator 28 comprend une pale 29 qui s'étend radialement depuis un pied 30. Nous comprenons, comme cela est également illustré sur la figure 1, que les aubes de stator 28 du redresseur sont non carénées. La turbomachine représentée est un USF, il n'y a pas de carénage de l'hélice et du redresseur. Les pales 29 comprennent également chacune un bord attaque 31 et un bord de fuite 32 opposés axialement. Les aubes de stator s'étendent également radialement à l'extérieur du carter inter veine 18. Il y a entre six et quatorze aubes de stator 28 autour des carters d'entrée 17 et inter-veine 18.

Comme nous pouvons le voir sur la figure 1, les pieds 30 des aubes de stator du redresseur sont montés entre un premier carter et un deuxième carter suivant l'axe longitudinal. Dans le présent exemple, le premier carter est le carter d'entrée 17 et le deuxième carter est un carter inter-compresseur 33.

Le carter inter-compresseur 33 est agencé en aval du compresseur basse pression 5. Plus précisément encore, le carter inter-compresseur 33 s'étend axialement entre le compresseur basse pression 5 et le compresseur haute pression 6. Plus précisément encore et en référence à la figure 1, le premier carter (carter d'entrée 17) et le deuxième carter (ici le carter inter compresseur 33) sont séparés axialement par l'organe rotorique (ici le compresseur basse pression). Chaque compresseur comporte au moins un étage rotorique et au moins un étage statorique disposés suivant l'axe longitudinal X. Par ailleurs, comme cela est représenté sur la figure 2, le carter inter-compresseur 33 comprend une virole radialement interne 34 et une virole radialement externe 35 qui sont centrées sur l'axe X et coaxiales. Entre la virole radialement interne 34 et la virole radialement externe 35 s'étendent radialement au moins un bras radial 36 structural. Plus précisément, plusieurs bras radiaux 36 sont fixés aux viroles radialement interne et externe 34, 35. Les bras radiaux 36 sont également répartis régulièrement autour de l'axe longitudinal X. Ils sont entre six et dix bras radiaux de manière à optimiser la résistance mécanique du carter inter-compresseur 33. Ces bras 36 sont fixes et sont réalisés d'un seul tenant avec les viroles interne et externe 34, 36. La virole radialement interne 34 forme au moins en partie la paroi radialement interne 25 de la veine primaire 22 tandis que la virole radialement externe 35 forme au moins en partie la paroi radialement externe 26 de la veine primaire 22. Le flux primaire F1 circule entre les premiers bras radiaux 21 du carter d'entée 17 puis les deuxièmes bras radiaux 36 du carter inter-compresseur 33.

En référence aux figures 1 et 2, les aubes de stator 28 sont portées par un manchon 37 qui est relié d'une part, au carter d'entrée 17 et d'autre part, au carter inter-compresseur 33. Chaque manchon 37 est porté par une bielle 38 qui permet de faire transiter les efforts aérodynamiques s'exerçant sur les aubes de stator 28, ainsi que les efforts de poussée transitant par le carter inter-compresseur 33. Chaque manchon 37 est cylindrique et s'étend radialement vers l'extérieur. La base de chaque manchon 37 est circulaire. En particulier, chaque manchon 37 comprend une jupe cylindrique 39 d'axe A parallèle à l'axe radial Z. La jupe cylindrique 39 s'étend radialement entre une première bordure 40 et une deuxième bordure 41. Chaque manchon 37 comprend un alésage 42 qui traverse la jupe cylindrique 39 de part et d'autre suivant l'axe son axe A. Chaque alésage 42 forme un logement interne destiné à recevoir le pied 30 d'une aube de stator 28.

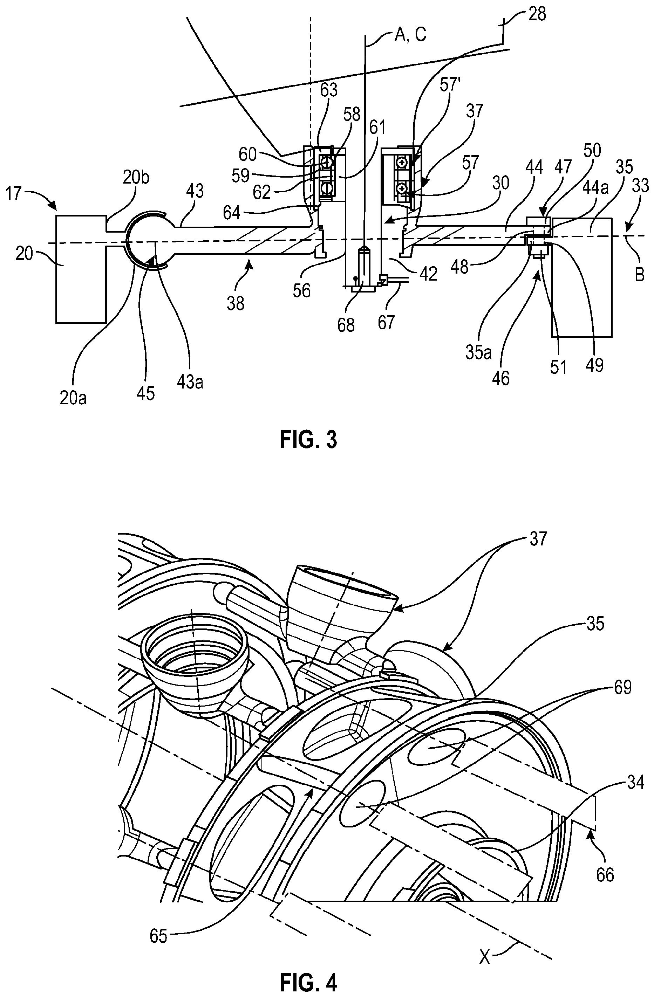

Comme nous pouvons le voir sur la figure 2, chaque bielle 38 est allongée et s'étend généralement suivant un axe B parallèle à l'axe longitudinal X. En particulier, une bielle 38 comprend une première extrémité 43 et une deuxième extrémité 44 qui sont opposées suivant son axe B. La première extrémité 43 de chaque bielle 38 est montée sur la virole radialement externe 20 du carter d'entrée 17 par une liaison 45 de type rotule. La liaison rotule 45 est réalisée par une tête sphérique et une coque de forme complémentaire à la tête sphérique comme cela est illustré sur la figure 3. Dans le présent exemple, chaque première extrémité 43 comprend à cet effet une tête sphérique 43a. Chaque tête 43a est reçue dans une coque 20a de forme sensiblement complémentaire. La coque 20a sert de logement à la tête sphérique 43a. La coque 20a est portée par la virole radialement externe 20. La coque 20a s'étend en particulier depuis une cloison 20b, radiale, annulaire de la virole radialement externe 20. La tête sphérique 43a est montée d'une part, mobile en rotation suivant de l'axe B et d'autre part mobile en pivotement suivant un angle de pivotement déterminé autour de l'axe B. L'angle de pivotement peut être compris entre 5° et 30°. Bien entendu, la liaison rotule 45 peut être réalisée de sorte que la première extrémité 43 comprenne la coque et la virole radialement externe 20 porte la tête sphérique.

En référencer à la figure 3, la deuxième extrémité 44 de chaque bielle 38 est reliée à la virole radialement externe 35 du carter inter-compresseur 33 via une liaison 46 de type encastrement. En particulier, la deuxième extrémité 44 comprend une oreille 44a qui prolonge la bielle suivant l'axe B et qui est définie dans un plan perpendiculaire à l'axe radial. Cette oreille est montée d'un côté d'un bord annulaire 35a amont de la virole radialement externe 35 du carter inter-compresseur 33. Autrement dit, ce bord 35a et l'oreille 44a sont superposés radialement. Par ailleurs, des organes de fixation 47 permettent de solidariser la deuxième extrémité 44 audit bord 35. A cet effet, l'oreille 44a comprend un trou 48 (représenté en pointillé) traversant sa paroi de part et d'autre suivant un axe (axe radial Z ici) perpendiculaire au plan de l'oreille. Le bord 35a comprend plusieurs orifices 49 radiaux (représentés en pointillé) qui traversent sa paroi de part et d'autre et qui sont répartis autour de l'axe X. Les organes de fixation 47 comprennent dans le présent exemple des vis 50 ayant chacune une tête et une tige d'axe radial. Chaque vis 50 traverse un trou 48 formé dans une oreille d'une bielle et l'orifice 49 correspondant du bord 35a. Les organes de fixation 47 comprennent encore des écrous 51 pour serrer l'ensemble.

La liaison rotule 45, notamment à l'amont, permet d'accéder facilement au compartiment du compresseur base pression pour vérifier l'état de santé de celui-ci avec un endoscope par exemple ou repositionner d'autres organes à proximité tels que des anneaux d'aubes de stator à calage variable. Un démontage de la deuxième extrémité 44 en aval, permettra de manipuler la bielle 38 en la faisant pivoter grâce à la liaison rotule pour accéder au compresseur basse pression.

Chaque manchon 37 se situe axialement au milieu de chaque bielle 38. En d'autres termes, chaque bielle 38 s'étend de part et d'autre de la jupe cylindrique 39. De même, les bielles 38 sont situées à environ un tiers de la hauteur des manchons 37 mesurées entre leurs premières et deuxièmes bordures 40, 41, et en partant de la deuxième bordure 41. De la sorte, la deuxième bordure 41 est située radialement à l'extérieur du carter d'entrée 17 et/ou du carter inter-compresseur 33. De même, nous comprenons que les bielles relient le premier carter et le deuxième carter via les manchons. Les premier et deuxième carters sont sensiblement contigus. Cela permet de rendre plus compact le module de turbomachine ainsi que la turbomachine.

Une bielle 38 et un manchon 37 forment une pièce monobloc. Avantageusement, mais non limitativement, la bielle 38 est formée d'un seul tenant (venue de matière) avec un manchon 37. Avantageusement, cet ensemble bielle-manchon est réalisé par un procédé de fabrication additive. De manière alternative, la bielle 38 et son manchon 37 sont fabriqués séparément (par exemple par fonderie, ou par usinage) et sont assemblés ensuite par soudage ou autre fixation analogue
Les bielles 38 sont réalisées dans un matériau métallique. De manière avantageuse, les bielles sont en titane.

Avec la géométrie des bielles (ici allongée en forme de I majuscule) et son matériau (titane), les angles de torsion dus aux efforts des aubes de stator 28 sont relativement faibles.

Suivant une alternative non représentée, chaque bielle présente une forme en Y ou en triangle. De même, d'autres types de liaison encastrement peuvent être envisagés.

En référence à la figure 3, les aubes de stator 28 sont avantageusement à calage variable de manière à optimiser la performance de la turbomachine. A cet effet, la turbomachine 1 comprend un autre système de changement de pas 55 des pales des aubes de stator 28. Nous pouvons voir que le pied 30 de chaque aube 28 se présente typiquement sous la forme d'un pivot 56 qui est monté pivotant suivant un axe C dans le logement interne du manchon 37. Les axes A et C sont coaxiaux. Le pivot 56 du pied 30 est monté pivotant grâce à au moins un palier de guidage 57 dans le logement interne de chaque manchon 37. Dans le présent exemple, deux paliers de guidage 57, 57' se superposent suivant l'axe radial Z (ou axe A du manchon 37). Ces paliers 57, 57' sont de préférence, mais non limitativement, des paliers à roulements. Les paliers 57, 57' peuvent avoir un diamètre plus important qu'à l'accoutumé du fait de la place disponible dans les manchons 37 et de leur localisation dans un espace annulaire entre le carter d'entrée et le carter inter-compresseur 33.

Chaque palier 57, 57' comprend une bague interne 58 solidaire en rotation du pivot 56 et une bague externe 59 qui entoure la bague interne 58. Les roulements comprennent des organes roulants 60 qui sont installés entre les surfaces internes des bagues interne et externe qui forment des pistes de roulement. Les organes roulants 60 comprennent ici des billes. Les paliers 57, 57' assurent avantageusement la rétention des aubes 28 dans le logement des manchons 37.

Une douille 61 cylindrique d'axe radial est installée dans un alésage 42 de chaque manchon 37 de manière à relier la bague interne 58 de chaque palier au pied de chaque aube de stator 28. La douille 61 est centrée sur l'axe de calage C des aubes de stator 28. Chaque douille 61 est également dotée de cannelures internes qui sont agencées sur une face cylindrique interne et qui sont destinées à s'accoupler avec des cannelures externes prévues sur une surface externe du pivot 56 de chaque pied d'aube de stator 28. Une entretoise 62 est également agencée radialement entre chaque palier de manière à assurer l'écartement radial des paliers. En effet, ceux-ci doivent reprendre les efforts, mais aussi les moments. Conséquemment, il faut deux paliers espacés afin de pouvoir assurer la reprise du moment de flexion. Cette entretoise 62 est placée avantageusement, mais non limitativement, entre deux bagues internes des paliers. Des éléments d'étanchéité sont prévus dans chaque alésage 42 de manière à prévenir la fuite de lubrifiant des paliers vers l'extérieur de ceux-ci.

Comme nous pouvons le voir également sur la figure 3, deux frettes sont agencées entre la paroi interne de chaque manchon 37 et les flancs latéraux des paliers 57, 57'. Une première frette 63 présente une section axiale en forme de L avec une branche qui recouvre radialement le palier 57' (radialement supérieur), et une deuxième frette 64 présente une section axiale en forme de I (majuscule) avec un renflement axial. Le palier 57 (radialement inférieur par rapport à l'axe radial Z et suivant la figure 3)) est en appui sur le renflement axial. Avantageusement, les première et deuxième frettes 63, 64 présentent chacune une forme annulaire et s'emboîtent l'une dans l'autre. Les frettes 63, 64 permettent un blocage radial des paliers.

Le système de changement de pas 55 comprend au moins un moyen de commande 66 et au moins un mécanisme de liaison 65 reliant chaque aube de stator 28 au moyen de commande 66. Le système de changement de pas 55 est agencé dans un espace annulaire défini dans le carter inter-veine 18. En particulier, le système de changement de pas 55 est situé radialement à l'extérieur du carter inter-compresseur 33. Plus précisément encore, le moyen de commande 66 est situé en aval des manchons 37 et des bielles 38. A cet endroit, il y en effet plus de place pour installer un tel mécanisme et les moyens de fixation des pieds 30 des aubes. Nous comprenons que les manchons sont situés également dans cet espace annulaire du carter inter-veine 18 et comme cela est représenté sur la figure 1.

Sur la figure 3, le pivot 56 de chaque pied 30 comprend un bras 67 formant un excentrique à son extrémité libre inférieure. De manière avantageuse, mais non limitativement, le pivot 56 comprend un alésage radial qui débouche au niveau de l'extrémité libre de celui-ci. Un organe de fixation 68 tel qu'une vis est reçu dans l'alésage radial pour fixer le bras 67 sur le pied de l'aube de stator 28. Dans l'exemple représenté, il y a autant de bras que d'aubes de stator 28. Le bras 67 reliée à une première extrémité d'une biellette (représentée en pointillé) qui forme le mécanisme de liaison 65. La première extrémité de la biellette est pourvue d'une rotule qui est traversée par un axe d'articulation porté par le bras 67. L'axe d'articulation est parallèle à l'axe radial Z. La deuxième extrémité de la biellette (opposée à la première extrémité) est reliée au moyen de commande 66.

Le moyen de commande 66 est avantageusement un actionneur tel qu'un vérin hydraulique. L'actionneur comprend un corps fixe et un corps mobile par rapport au premier corps fixe. Le premier corps fixe est relié à une virole fixe de la turbomachine de manière à être immobile en translation et en rotation. La virole fixe est en particulier montée sur le carter inter-veine fixe. Le corps mobile se déplace en translation axialement par rapport au corps fixe suivant l'axe longitudinal X. Le corps mobile comprend une tige axiale dont son extrémité libre est reliée à la deuxième extrémité de la biellette. L'actionneur est relié à une source d'alimentation fluidique pour alimenter en huile sous pression des chambres (non représentée) du corps fixe. Dans cet exemple, la virole radialement externe 35 du carter inter compresseur 33 comprend une pluralité de lumières 69 traversant la paroi de celle-ci de part et d'autre et suivant l'axe longitudinal X. Au moins une partie de chaque tige axiale est destinée à traverser une lumière 69. Il y a autant de lumières 69 que de tiges ou encore de biellettes. Le moyen de commande 66 est localisé en aval du carter inter compresseur 33.

Suivant un autre mode de réalisation illustré sur la figure 4, le moyen de commande 66 comprend avantageusement plusieurs actionneurs tels que des vérins hydrauliques. Chaque actionneur est relié à une biellette laquelle traverse au moins en partie une lumière.

Ainsi, les aubes de stator 28 sont éloignées des aubes de l'hélice 2 sans impacter la longueur de la turbomachine et sans pénaliser l'encombrement de celle-ci notamment pour installer un système de changement de pas 55 pour le redresseur. Les bielles 38 permettent le passage des efforts de poussée depuis l'amont de la turbomachine en passant par le carter d'entrée 17 puis le carter inter-compresseur 33 et les efforts aérodynamiques s'exerçant sur les aubes 28. Grâce à cette configuration, il n'est pas utile de rajouter une pièce supplémentaire.

A cet effet, le rapport S /C correspondant à la distance S entre un bord de fuite des aubes de l'hélice 2 et du bord d'attaque 31 des aubes de stator 28 sur la corde C des aubes de l'hélice 2 est amélioré. Ce rapport est de l'ordre de 3 alors que dans l'art antérieur ce rapport est compris entre 1 et 2. Le rapport minimal pour le respect des normes acoustiques est en effet de 1.

## Revendications

1. Module de turbomachine d'axe longitudinal X, comportant une hélice (2) non carénée destinée à être entrainée en rotation autour de l'axe longitudinal X par un arbre de puissance (10, 11) qui est relié au moins à un organe rotorique (5, 6), au moins un redresseur (3) comprenant une pluralité d'aubes de stator (28) réparties régulièrement autour de l'axe longitudinal X et s'étendant radialement dans un flux d'air secondaire (F2), au moins un premier carter (17) monté en amont, suivant l'axe longitudinal, de l'organe rotorique (5, 6) et un deuxième carter (33) monté en aval, suivant l'axe longitudinal, de l'organe rotorique (5, 6), le premier carter (17) et le deuxième carter (33) étant séparés par l'organe rotorique (5, 6) suivant l'axe longitudinal X, et étant contigus, **caractérisé en ce que** les aubes de stator (28) comprennent chacun un pied (30) logé dans un manchon (37) qui est relié d'une part, au premier carter (17) et d'autre part, au deuxième carter (33).

2. Module de turbomachine selon la revendication précédente, **caractérisé en ce qu'**une pluralité de bielles (38) s'étend entre le premier carter (17) et le deuxième carter (33), chaque bielle (38) portant un manchon (37).

3. Module de turbomachine selon la revendication précédente, **caractérisé en ce que** chaque bielle (38) comprend une première extrémité (43) montée sur une première virole radialement externe (20) du premier carter (17) par une liaison de type rotule et une deuxième extrémité (44) montée sur une deuxième virole radialement externe (35) du deuxième carter (33) par une liaison de type encastrement.

4. Module de turbomachine selon l'une des revendications 2 et 3, **caractérisé en ce que** chaque bielle (38) est réalisée d'une seule pièce avec un manchon (37).

5. Module de turbomachine selon l'une quelconque des revendications précédentes, **caractérisé en ce que** les aubes de stator (28) du redresseur (3) sont à calage variable et **en ce qu'**il comprend un système de changement de pas (55) des pales des aubes de stator (28) qui est agencé radialement à l'extérieur du deuxième carter (33).

6. Module de turbomachine selon l'une quelconque des revendications précédentes, **caractérisé en ce qu'**un moins un palier (57, 57') de guidage en rotation d'un pied (30) d'aube de stator (28) est logé dans un logement interne d'un manchon (37).

7. Module de turbomachine selon l'une des revendications précédentes, **caractérisé en ce que** le premier carter (17) est un carter d'entrée qui porte un bec de séparation (16) destiné à diviser un flux d'air en un flux d'air primaire et en le flux d'air secondaire, le carter d'entrée comprenant une première virole radialement interne (19), la première virole radialement externe (20) et entre lesquelles s'étend au moins un premier bras radial structural (21).

8. Module de turbomachine selon l'une des revendications 3 à 7, **caractérisé en ce que** le deuxième carter est un carter inter-compresseur agencé en aval d'un compresseur basse pression, suivant l'axe longitudinal, le carter inter-compresseur comprenant une deuxième virole radialement interne (34), la deuxième virole radialement externe (35) qui sont coaxiales avec l'axe longitudinal X et entre lesquelles s'étend au moins un deuxième bras radial structural (36).

9. Module de turbomachine selon l'une des revendications précédentes, **caractérisé en ce que** le rapport S/C correspondant à la distance S entre un bord de fuite des aubes de l'hélice (2) et un bord d'attaque (31) d'une aube de stator (28) sur la corde C des aubes de l'hélice (2) est de l'ordre de 3.

10. Module de turbomachine selon l'une des revendications précédentes, **caractérisé en ce que** les aubes de stator (28) du redresseur sont non carénées.

11. Turbomachine d'aéronef comprenant au moins un module de turbomachine selon l'une quelconque des revendications précédentes et un générateur de gaz (4) en aval de l'hélice (2).

## Patentansprüche

1. Turbotriebwerksmodul mit Längsachse X, umfassend einen nicht verkleideten Propeller (2), der dazu bestimmt ist, um die Längsachse X durch eine Leistungswelle (10, 11) in Drehung versetzt zu werden, die mit mindestens einem Rotorelement (5, 6) verbunden ist, mindestens einen Gleichrichter (3), umfassend eine Vielzahl von gleichmäßig um die Längsachse X verteilten und sich radial in einem Sekundärluftstrom (F2) erstreckenden Statorschaufeln (28), mindestens ein erstes, entlang der Längsachse, stromaufwärts des Rotorelements (5, 6) montiertes Gehäuse (17) und ein zweites, entlang der Längsachse stromabwärts des Rotorelements (5, 6) montiertes Gehäuse (33) aufweist, wobei das erste Gehäuse (17) und das zweite Gehäuse (33) durch das Rotorelement (5, 6) entlang der Längsachse X getrennt sind und aneinander grenzend sind, **dadurch gekennzeichnet, dass** die Statorschaufeln (28) jeweils einen Fuß (30) umfassen, der in einer Hülse (37) aufgenommen ist, die einerseits mit dem ersten Gehäuse (17) und andererseits mit dem zweiten Gehäuse (33) verbunden ist.

2. Turbotriebwerksmodul nach dem vorstehenden Anspruch, **dadurch gekennzeichnet, dass** sich eine Vielzahl von Pleuelstangen (38) zwischen dem ersten Gehäuse (17) und dem zweiten Gehäuse (33) erstreckt, wobei jede Pleuelstange (38) eine Hülse (37) trägt.

3. Turbotriebwerksmodul nach dem vorstehenden Anspruch, **dadurch gekennzeichnet, dass** jede Pleuelstange (38) ein erstes Ende (43), das auf einem ersten radial äußeren Ring (20) des ersten Gehäuses (17) durch eine Kugelgelenkverbindung montiert ist, und ein zweites Ende (44) umfasst, das auf einem zweiten radial äußeren Ring (35) des zweiten Gehäuses (33) durch eine Einbauverbindung montiert ist.

4. Turbotriebwerksmodul nach einem der Ansprüche 2 und 3, **dadurch gekennzeichnet, dass** jede Pleuelstange (38) aus einem Stück mit einer Hülse (37) ausgeführt ist.

5. Turbotriebwerksmodul nach einem der vorstehenden Ansprüche, **dadurch gekennzeichnet, dass** die Statorschaufeln (28) des Gleichrichters (3) eine variable Feststellposition aufweisen, und dass es ein System zum Verändern der Steigung (55) der Schaufeln der Statorschaufeln (28) umfasst, das radial außerhalb des zweiten Gehäuses (33) angeordnet ist.

6. Turbotriebwerksmodul nach einem der vorstehenden Ansprüche, **dadurch gekennzeichnet, dass** mindestens ein Lager (57, 57') zur Drehführung eines Fußes (30) einer Statorleitschaufel (28) in einer inneren Aufnahme einer Hülse (37) aufgenommen ist.

7. Turbotriebwerksmodul nach einem der vorstehenden Ansprüche, **dadurch gekennzeichnet, dass** das erste Gehäuse (17) ein Eingangsgehäuse ist, das einen Trennschnabel (16) trägt, der dazu bestimmt ist, einen Luftstrom in einen Primärluftstrom und in den Sekundärluftstrom zu teilen, wobei das Eingangsgehäuse einen ersten radial inneren Ring (19), einen ersten radial äußeren Ring (20) umfasst und zwischen denen sich mindestens ein erster radialer Strukturarm (21) erstreckt.

8. Turbotriebwerksmodul nach einem der Ansprüche 3 bis 7, **dadurch gekennzeichnet, dass** das zweite Gehäuse ein Zwischenverdichter-Gehäuse ist, das entlang der Längsachse stromabwärtig eines Niederdruckverdichters angeordnet ist, wobei das Zwischenverdichter-Gehäuse einen zweiten radial inneren Ring (34), den zweiten radial äußeren Ring (35) umfasst, die koaxial mit der Längsachse X angeordnet sind und zwischen denen sich mindestens ein zweiter radialer Strukturarm (36) erstreckt.

9. Turbotriebwerksmodul nach einem der vorstehenden Ansprüche, **dadurch gekennzeichnet, dass** das Verhältnis S/C, das dem Abstand S zwischen einer Hinterkante der Schaufeln des Propellers (2) und einer Angriffskante (31) einer Statorschaufel (28) auf der Sehne C der Schaufeln des Propellers (2) in der Größenordnung 3 liegt.

10. Turbotriebwerksmodul nach einem der vorstehenden Ansprüche, **dadurch gekennzeichnet, dass** die Statorschaufeln (28) des Gleichrichters nicht verkleidet sind.

11. Turbotriebwerk eines Luftfahrzeugs, umfassend mindestens ein Turbotriebwerksmodul nach einem der vorstehenden Ansprüche und einen Gasgenerator (4) stromabwärts des Propellers (2).

## Claims

1. A turbine engine module of longitudinal axis X, comprising an unducted propeller (2) intended to be driven in rotation about the longitudinal axis X by a power shaft (10, 11) which is connected to at least one rotor member (5, 6), at least one straightener (3) comprising a plurality of stator vanes (28) evenly distributed around the longitudinal axis X and extend radially into a secondary air flow (F2), at least one first casing (17) mounted upstream along the longitudinal axis of the rotor member (5, 6) and a second casing (33) mounted downstream along the longitudinal axis of the rotor member (5, 6), the first casing (17) and the second casing (33) being separated by the rotor member (5) along the longitudinal axis X, and being contiguous, **characterised in that** the stator vanes (28) each comprise a root (30) housed in a sleeve (37) which is connected on the one hand to the first casing (17) and on the other hand to the second casing (33).

2. The turbine engine module according to the preceding claim, **characterised in that** a plurality of connecting rods (38) extend between the first casing (17) and the second casing (33), each connecting rod (38) carrying a sleeve (37).

3. The turbine engine module according to the preceding claim, **characterised in that** each connecting rod (38) comprises a first end (43) mounted on a first radially external shroud (20) of the first casing (17) by a ball joint type connection and a second end (44) mounted on a second radially external shroud (35) of the second casing (33) by an embedded type connection.

4. The turbine engine module according to one of claims 2 and 3, **characterised in that** each connecting rod (38) is made in one-piece with a sleeve (37).

5. The turbine engine module according to any one of the preceding claims, **characterised in that** the stator vanes (28) of the straightener (3) are of variable pitch setting and **in that** it comprises a pitch change system (55) for changing the pitch of the blades of the stator vanes (28) which is arranged radially outside the second casing (33).

6. The turbine engine module according to any one of the preceding claims, **characterised in that** at least one rotational guide bearing (57, 57') for guiding in rotation a root (30) of a stator vane (28) is housed in an internal housing of a sleeve (37).

7. The turbine engine module according to one of the preceding claims, **characterised in that** the first casing (17) is an inlet casing which carries a splitter nose (16) for dividing an air flow into a primary air flow and the secondary air flow, the inlet casing comprising a first radially internal shroud (19), the first radially external shroud (20) and between which extends at least a first radial structural arm (21).

8. The turbine engine module according to one of claims 3 to 7, **characterised in that** the second casing is an inter-compressor casing arranged downstream of a low-pressure compressor, along the longitudinal axis, the inter-compressor casing comprising a second radially internal shroud (34), the second radially external shroud (35) which are coaxial with the longitudinal axis X and between which extends at least one second radial structural arm (36).

9. The turbine engine module according to one of the preceding claims, **characterised in that** the ratio S/C corresponding to the distance S between a trailing edge of the vanes of the propeller (2) and a leading edge (31) of a stator vane (28) on the chord C of the vanes of the propeller (2) is of the order of 3.

10. The turbine engine module according to one of the preceding claims, **characterised in that** the stator vanes (28) of the straightener are unducted.

11. An aircraft turbine engine comprising at least one turbine engine module according to any one of the preceding claims and a gas generator (4) downstream of the propeller (2).
